# EUROPEAN PATENT APPLICATION

(11) **EP 4 620 447 A1**
(43) Date of publication of application: **24.09.2025**
(21) Application number: 23891909.6
(22) Date of filing: 08.11.2023
(51) Int. Cl.: A61H 9/00, G05B 11/28, B01D 46/42

(54) **AIR FILTER STRUCTURE, AND MEDICAL TREATMENT APPARATUS USING NEGATIVE PRESSURE, COMPRISING SAME**

(30) Priority: 17.11.2022 KR 20220154147; 17.11.2022 KR 20220154148
(71) Applicant: CLASSYS INC., Seoul 06220 (KR)
(72) Inventor: KO, Min Soo, Seoul 01632 (KR)
(74) Representative: Wörz, Volker Alfred
(86) International application number: PCT/KR2023/017865
(87) International publication number: WO 2024/106842

(57) **Abstract**

The present invention relates to an air filter structure, and a medical treatment apparatus using negative pressure, comprising same. The present invention reduces noise and vibration generated in an air line part when negative pressure is formed and released, and has a vacuum motor part that adjusts the direction of air such that, for both formation and release of negative pressure, the air is suctioned through a suction port and is discharged through a discharge port, and thus intervals of suctioning and discharging air are reduced to enable minimization of negative pressure repeating time, thereby greatly improving a treatment effect using negative pressure and obtaining various treatment effects.

## Description

### [Technical Field]

The present disclosure relates to an air filter structure and a medical treatment apparatus using negative pressure comprising the same and, more particularly, to an air filter structure that filters out and discharges foreign substances in an air line through which air is suctioned and discharged, and can reduce noise during operation of a vacuum motor, and to a medical treatment apparatus using negative pressure comprising the same.

### [Background Art]

In general, medical treatment devices using negative pressure obtain therapeutic effects by placing a vacuum cup on a specific area of the patient's skin and then providing negative pressure to the skin using a pump, and as the diversity of skin treatment procedures increases, the use of such devices is gradually increasing.

As medical treatment devices using negative pressure, there are a vacuum massage device, a fat-dissolving device that suctions the patient's skin using vacuum and then breaks down fat by emitting ultrasonic waves to the suctioned area, a cupping device that obtains therapeutic effects based on traditional Korean medicine by suctioning the skin, etc.

Medical devices of the related art that obtain therapeutic effects using negative pressure treat the patient's skin by maintaining a vacuum state inside cups that are tightly attached to the patient's skin through the suction of air from the cups by operating a pump for providing negative pressure.

That is, medical treatment devices using negative pressure in the related art obtain therapeutic effects by maintaining a vacuum state for a certain time with vacuum cups fixed in close contact with the patient's skin.

Medical treatment devices using negative pressure in the related art obtain therapeutic effects through a simple structure that maintains a vacuum state for a certain time with vacuum cups fixed in close contact with the patient's skin, but they had limitations in achieving therapeutic effects.

As a result, medical treatment devices using negative pressure are being developed that can improve skin elasticity and reduce wrinkles by repeatedly applying negative pressure, that is, alternating between generating and releasing negative pressure to massage the skin.

Medical treatment devices using negative pressure have a problem that significant noise and vibration are generated in the repeated process of generating negative pressure by suctioning air through the operation of a vacuum motor and releasing the negative pressure by discharging the air.

Further, medical treatment devices using negative pressure have a problem that foreign substances in the air enter a vacuum motor and cause malfunctions in the process of suctioning air. Further, in order to prevent this problem, a filter that remove foreign substances is installed in the air line, but there is a problem of the inconvenience of periodic filter replacement and of the further increase of noise due to the filter in the process of suctioning and discharging air.

Further, medical treatment devices using negative pressure generate negative pressure by suctioning air with the operation of a vacuum motor and release the negative pressure by discharging the air. However, the process of suctioning air occurs rapidly, but discharging the air in the reverse direction takes more time, so there is a problem that the time interval for generating negative pressure is limited, and accordingly, the treatment effect from the negative pressure is lower.

A prior patent related to the present disclosure is Korean Patent Application Publication No. 2021-0147811, titled "Treatment Device Using Vacuum Cup" (published on 2021.12.07).

### [Disclosure]

### [Technical Problem]

An objective of the present disclosure is to provide an air filter structure that can filter out and remove foreign substances from the air in an air line that repeatedly generates negative pressure and can reduce noise generated during the operation of a vacuum motor, and a medical treatment apparatus using negative pressure comprising the same.

Another objective of the present disclosure is to provide a medical treatment apparatus using negative pressure that can minimize the time for which negative pressure is repeated by reducing the interval for suction and discharge of air using a 4-port solenoid valve.

Another objective of the present disclosure is to provide an air filter structure that can effectively absorb vibration generated during the operation of a vacuum motor, and a medical treatment apparatus using negative pressure comprising the same.

### [Technical Solution]

In order to achieve the objectives described above, an embodiment of an air filter structure according to the present disclosure includes: a filter-housing tube member having both ends open and having an air passage allowing air to pass; and a porous filter member positioned in the air passage and having a plurality of pores allowing air to pass.

An embodiment of the air filter structure according to the present disclosure may further include: a first filter connection tube member connected to a first side of the filter-housing tube member and having a channel with a diameter smaller than a diameter of the air passage; and a second filter connection tube member connected to a second side of the filter-housing tube member and having a channel with a diameter smaller than a diameter of the air passage, wherein the porous filter member may include a plurality of porous filter members positioned between the first filter connection tube member and the second filter connection tube member, and may be held to be limited in movement by the first filter connection tube member and the second filter connection tube member.

**In** the present disclosure, the filter-housing tube member may contract due to pressure drop generated therein when filtering out foreign substances through the porous member while external air is suctioned through a first port on the first side and discharged through a second port on the second side, and may offset waves of air including waves by expanding when air is discharged through the first port from the second port.

Further, in order to achieve the objectives, a medical treatment apparatus using negative pressure according to the present disclosure includes: a cup member configured to come in contact with the skin of a treatment target area and having a suction space for suctioning the skin; a vacuum motor unit having a suction port for suctioning air and a discharge port for discharging air suctioned therein to the outside; an air line part connected to the vacuum motor unit and the cup member and configured to suction and discharge air in the cup member to the outside or supply air into the cup member; an air filter structure positioned on the air line part; and a valve unit connected to a plurality of air line parts and configured to adjust the direction of air flowing through the air line parts, wherein the valve unit adjusts the direction of air such that air is suctioned through the suction port and discharged through the discharge port when negative pressure is generated in the cup member or generative pressure in the cup member is released.

In the present disclosure, the air filter structure may include: a filter-housing tube member having both ends open and having an air passage allowing air to pass; and a porous filter member positioned in the air passage and having a plurality of pores allowing air to pass,

In the present disclosure, the air line part may further include: a first filter connection tube member having a channel with a diameter smaller than a diameter of the air passage and inserted in a first side of the filter-housing tube member; and a second filter connection tube member having a channel with a diameter smaller than a diameter of the air passage and inserted in a second side of the filter-housing tube member, and the porous filter member may include a plurality of porous filter members positioned between the first filter connection tube member and the second filter connection tube member, and may be held to be limited in movement by the first filter connection tube member and the second filter connection tube member.

In the present disclosure, the filter-housing tube member may reduce noise by offsetting waves of air including waves by expanding when air in the cup member suctioned from the vacuum motor unit is discharged to the outside to generate negative pressure in the cup member, and may contract when external air is suctioned into the air line part to release negative pressure in the cup member.

In the present disclosure, the valve unit may be a 4-port solenoid valve unit comprising four ports to which air line parts can be connected, and the air line part may include: a first air line part connected to a first port of the 4-port solenoid valve unit and suctioning external air or discharging internal air to the outside; a second air line part connecting a second port of the 4-port solenoid valve unit and the suction port of the vacuum motor unit; a third air line part connecting a third port of the 4-port solenoid valve unit and the discharge port; and a fourth air line part connecting a fourth port of the 4-port solenoid valve unit and the cup member.

In the present disclosure, when the vacuum motor unit operates and generates negative pressure in the cup member by suctioning air in the cup member, the 4-port solenoid valve may connect the fourth air line part and the second air line part and connect the third air line part and the first air line part; and when the vacuum motor unit operates and releases negative pressure in the cup member by suctioning external air through the first air line part, the 4-port solenoid valve may connect the first air line part and the second air line part and connect the third air line part and the fourth air line part.

In the present disclosure, the air filter structure may be positioned on the first air line part, may remove foreign substances contained in external air that is introduced through the first air line part, and may reduce noise when air in the vacuum motor unit is discharged to the outside through the first air line part.

In the present disclosure, the air filter structure may include: a filter-housing tube member having both ends open and having an air passage allowing air to pass; and a porous filter member positioned in the air passage and having a plurality of pores allowing air to pass, the filter-housing tube member may be made of an elastic member that can be contracted or expanded by pressure of air, and the filter-housing tube member may reduce noise by offsetting waves of air including waves by expanding when air in the cup member suctioned from the vacuum motor unit is discharged to the outside to generate negative pressure in the cup member.

Further, in order to achieve the objectives, a medical treatment apparatus using negative pressure according to the present disclosure includes: a cup member configured to come in contact with the skin of a treatment target area and having a suction space for suctioning the skin; a vacuum motor unit having a suction port for suctioning air and a discharge port for discharging air suctioned therein to the outside; an air line part connecting the cup member and the vacuum motor unit; an air filter structure positioned on the air line part; and a vibration absorption support unit on which the vacuum motor unit is disposed and that is made of an elastic member and configured to absorb vibration generated by the vacuum motor unit.

In the present disclosure, the vibration absorption support unit may include: a first vibration absorption pad member that is made of an elastic material and on which the vacuum motor unit is disposed; a second vibration absorption pad member positioned under the first vibration absorption pad member and made of an elastic material; and a base support member positioned under the second vibration absorption pad member and configured to fix positions of the first vibration absorption pad member and the second vibration absorption pad member.

In the present disclosure, the vibration absorption support unit may further include a pad position fixing mechanism configured to fix the positions of the second vibration absorption pad member and the first vibration absorption pad member sequentially stacked on the base support member.

In the present disclosure, the pad position fixing mechanism may include: pad fixing boss members positioned to protrude on the base support member and positioned through the second vibration absorption pad member and the first vibration absorption pad member; pad fixing coupling members coupled to upper ends of the pad fixing boss members and being in close contact with an upper portion of the first vibration absorption pad member; and motor fixing coupling members positioned between the second vibration absorption pad member and the first vibration absorption pad member and coupled to a lower surface of the vacuum motor unit through the first vibration absorption pad member between the second vibration absorption pad member and the first vibration absorption pad member.

In the present disclosure, the pad fixing boss members may protrude at a height equal to a stacked height of the first vibration absorption pad member and the second vibration absorption pad member or may have a height between 95% and 100% of the stacked height.

In the present disclosure, pad fixing thread grooves in which bolts can be fastened may be positioned on a top of the pad fixing boss members, and the pad fixing coupling members may be pad fixing bolts fastened in the pad fixing thread grooves.

In the present disclosure, a plurality of motor fixing through-holes through which the motor fixing coupling members are disposed may be positioned on the first vibration absorption pad member, and the motor fixing coupling members may be motor fixing bolts fastened to a bottom of the vacuum motor unit through the motor fixing through-holes.

In order to achieve the objectives, a medical treatment apparatus using negative pressure according to the present disclosure may further include a controller configured to control operation of the vacuum motor unit, and the controller may be connected to a DC power unit, converts DC power into DC power having a wider bandwidth, may change the DC power into AC power, may supply the converted AC power to the vacuum motor unit, and may adjust a level of the AC power, thereby controlling operation of the vacuum motor unit.

In the present disclosure, the controller may include: a PWM signal generation unit is connected to the DC power unit and configured to convert DC power into a Pulse Width Modulation (PWM) signal; a signal amplification unit configured to amplify the PWM signal generated by the PWM signal generation unit; a DC power conversion unit configured to convert alternating current power amplified by the signal amplification unit into DC power; and an AC generation unit configured to convert the converted DC power into AC and supply the AC power to the vacuum motor unit.

### [Advantageous Effects]

The present disclosure can filter out and remove foreign matter from air in an air line that repeatedly generates negative pressure, and can reduce noise generated during the operation of a vacuum motor. Accordingly, the present disclosure has the effect of prevent malfunctions and failures of devices due to foreign substances, improving the use environment significantly, and greatly enhancing the marketability of devices.

The present disclosure can minimize the time for which negative pressure is repeated by reducing the interval of suctioning and discharging air using a 4-port solenoid valve unit 410, thereby having the effect of significantly enhancing the treatment effect from negative pressure and obtaining various therapeutic effects.

Further, the present disclosure has the effect of significantly improving the satisfaction of both an operator and a subject during treatment using negative pressure and of greatly enhancing the marketability of the medical treatment apparatus using negative pressure by minimizing vibration and noise generated during the operation of the vacuum motor.

### [Description of Drawings]

FIG. 1 is a cross-sectional view showing an embodiment of an air filter structure according to the present disclosure.
FIG. 2 and FIG. 3 are schematic views showing operational examples of the air filter structure according to the present disclosure.
FIG. 4 is a schematic view showing an embodiment of a medical treatment apparatus using negative pressure according to the present disclosure.
FIG. 5 is a perspective view showing an embodiment of the medical treatment apparatus using negative pressure according to the present disclosure.
FIG. 6 is a perspective view showing a support structure of a vacuum motor unit in an embodiment of the medical treatment apparatus using negative pressure according to the present disclosure.
FIG. 7 is a cross-sectional view showing the support structure of the vacuum motor unit in an embodiment of the medical treatment apparatus using negative pressure according to the present disclosure.
FIG. 8 is a circuit diagram showing an embodiment of a controller that controls the operation of the vacuum motor unit in an embodiment of the medical treatment apparatus using negative pressure according to the present disclosure

***Description of main reference numerals in drawings**

| | | | |
|---|---|---|---|
| 1 : | air filter structure | 2 : | air filter unit |
| 10 : | filter-housing tube member | 10a : | air passage |
| 20 : | porous filter member | 30 : | first filter connection tube member |
| 40 : | second filter connection tube member | 100 : | cup member |
| 200 : | vacuum motor unit | 210 : | suction port |
| 220 : | discharge port | 300 : | air line part |
| 310 : | first air line part | 320 : | second air line part |
| 330 : | third air line part | 340 : | fourth air line part |
| 400 : | valve unit | 410 : | 4-port solenoid valve unit |
| 500 : | controller | 500a : | DC power unit |
| 510 : | PWM signal generation unit | 520 : | signal amplification unit |
| 530 : | DC power conversion unit | 540 : | AC generation unit |
| 600 : | body casing | 700 : | vibration absorption support unit |
| 700a : | boss through-hole | 700b : | of motor fixing through-hole |
| 710 : | first vibration absorption pad member | 720 : | second vibration absorption pad member |
| 730 : | base support member | 740 : | a pad position fixing mechanism |
| 741 : | pad fixing boss member | 742 : | pad fixing coupling member |
| 743 : | motor fixing coupling member | | |

### [Best Mode]

Hereafter, the present disclosure is described in more detail.

Exemplary embodiments of the present disclosure are described hereafter in detail with reference to the accompanying drawings. Before describing the present disclosure, it should be noted that the terms or terminologies used herein and claims should not be construed as common meanings or the meanings in dictionaries. Therefore, the configurations described in the embodiments and drawings of the present disclosure are merely exemplary embodiments but do not represent all of the technical spirit of the present invention. Thus, it should be understood that the present disclosure should be construed as including all the changes, equivalents, and substitutions included in the spirit and scope of the present disclosure at the time of filing this application.

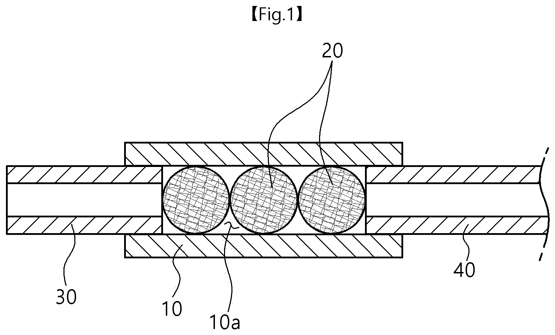

FIG. 1 is a cross-sectional view showing an embodiment of an air filter structure 1 according to the present disclosure. Referring to FIG. 1, an embodiment of an air filter structure 1 according to the present disclosure includes a filter-housing tube member 10 having both ends open and having an air passage 10a allowing air to pass, and a porous filter member 20 which is positioned in the air passage 10a and having a plurality of pores allowing air to pass.

The air filter structure 1 according to the present disclosure is installed in an air line that introduces external air and supplies it into a vacuum motor, and discharges internal air discharged from the vacuum motor to the outside, and can remove foreign substances in the external air supplied into the vacuum motor and absorb noise generated in the air line when the external air is introduced or the internal air is discharged.

It is noted that the air filter structure 1 according to the present disclosure is installed in an air line that introduces external air into an apparatus and discharges internal air from the apparatus in addition the vacuum motor, and can remove foreign substances contained in the external air supplied into the apparatus and absorb noise generated in the air line when external air is introduced or internal air is discharged.

The filter-housing tube member 10 has one side serving as a first port through which external air is introduced into the air passage 10a and internal air is discharged to the outside, and another side serving as a second port through which internal air is introduced into the air passage 10a and external air is discharged to be supplied into the apparatus.

The porous filter member 20 is, as an example, made of fiber, and is formed in a shape of which the outer peripheral surface is in close contact with the inner peripheral surface of the air passage 10a.

The porous filter member 20 is formed in a shape that can block the air passage 10a with fibers such as nonwoven fabric or nanofibers, and has a structure that allows air passing through the air passage 10a to pass through the pores formed between the fibers, as an example. Further, it is also noted that it can be modified and implemented using a known porous filter member made of a material capable of forming multiple pores.

The porous filter member 20 is made of fiber and has a structure having multiple pores, as an example, and absorbs foreign substances contained in the external air passing through the air passage 10a via the multiple pores, and absorbs noise generated during introduction or discharge of air through the filter-housing tube member 10, thereby being able to minimize noise generated in the air line connected to the filter-housing tube member 10.

When the air passage 10a has a circular cross-section, the porous filter member 20 is formed in a spherical, that is, ball shape, as an example. Further, the porous filter member 20 blocks the air passage 10a, so external air that is introduced into the air passage 10a passes only through the pores, whereby external air passes.

A plurality of porous filter members 20 is provided in the filter-housing tube member 10 and is positioned in the longitudinal direction of the filter-housing tube member 10, that is, in the direction in which air flows through the air passage 10a, so it is possible to more effectively remove foreign substances contained in the external air and minimize noise generated when high-pressure air passes through the air line connected to the filter-housing tube member 10.

The filter-housing tube member 10 is made of an elastic material that can contract or expand and return to its original shape by contracting, and for example, may be made of silicone.

An embodiment of the air filter structure 1 according to the present disclosure further includes a first filter connection tube member 30 connected to one side of the filter-housing tube member 10 and having a channel with a diameter smaller than the diameter of the air passage 10a, and a second filter connection tube member 40 connected to the another side of the filter-housing tube member 10 and having a channel with a diameter smaller than the diameter of the air passage 10a.

It is exemplified that the first filter connection tube member 30 is partially inserted in one side of the filter-housing tube member 10, thereby being connected to the filter-housing tube member 10, and the second filter connection tube member 40 is partially inserted in another side of the filter-housing tube member 10, thereby being connected to the filter-housing tube member 10.

The first filter connection tube member 30 and the second filter connection tube member 40 serve to reduce the diameter of the air passage 10a at both ends of the filter-housing tube member 10, respectively, and the plurality of porous filter members 20 is positioned between the first filter connection tube member 30 and the second filter connection tube member 40.

The first filter connection tube member 30 and the second filter connection tube member 40 serve to support the position of the plurality of porous filter members 20 in the air passage 10a by reducing the diameter of the channel, through which air flows, at both ends of the filter-housing tube member 10, respectively, and prevent the porous filter members 20 from moving due to the flow of air in the air passage 10a.

A plurality of porous filter members 20, of which two are positioned at both ends of the air passage 10a, are respectively held securely in place by the first filter connection tube member 30 and the second filter connection tube member 40, so that the plurality of porous filter members 20 can effectively capture and remove foreign substances contained in the external air when the external air passes through the air passage without moving by the flow of air in the air passage 10a while remaining stably fixed in position.

When external air is introduced and supplied to the apparatus, that is, the vacuum motor, the filter-housing tube member 10 allows the external air to pass through the multiple porous of the plurality of porous filter members 20 in the air passage 10a, whereby foreign substances are captured and removed by the entangled fibers of the porous filter members 20.

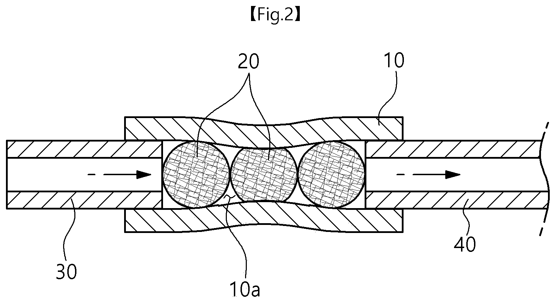

FIG. 2 is a schematic view showing an operational example of the air filter structure 1 according to the present disclosure shows an example of the suction of external air into the filter-housing tube member 10. Referring to FIG. 2, the filter-housing tube member 10 suctions external air through the first port and discharges it through the second port, whereby when air is supplied to the apparatus, that is, the vacuum motor, foreign substances in the external air are filtered out by the porous filter members 20 while the external air passes through the porous filter members 20 with the filter-housing tube member 10 maintaining its original shape or in a contracted state.

Accordingly, when external air is suctioned, at least some of the pores of the porous members 20 are clogged with the foreign substances included in the external air.

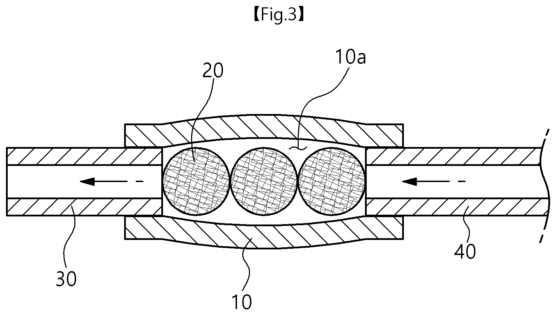

FIG. 3 is a schematic view showing an operational example of the air filter structure 1 according to the present disclosure shows an example of the discharge of internal air to the outside through the filter-housing tube member 10. Referring to FIG. 3, when the filter-housing tube member 10 suctions in internal air through the second port and discharges it to the outside through the first port, the porous filter members 20 expand as the pressure inside the air passage 10a increases due to the partial blockage of the pores of the porous filter members 20, whereby foreign substances filtered out by the porous filter members 20 can be smoothly discharged to the outside along with the air.

Further, with reference to FIGS. 2 and 3, a noise reduction structure of the air filter structure 1 according to the present disclosure when external air is suctioned or discharged by the vacuum motor, that is, the apparatus is described in detail hereafter.

When the vacuum motor suctions external air and the external air enters the filter-housing tube member 10, a load is generated in the filter-housing tube member 10 while foreign substances contained in the external air are caught by the porous filter members 20, whereby a weak vacuum state is generated. Further, the filter-housing tube member 10 made of an elastic material contracts due to the weak vacuum, that is, the pressure drop of the air generated therein, and the porous filter members 20 come into close contact with the inner surface of the air passage 10a. Accordingly, the external air passes only through the pores of the porous filter members 20, and foreign substances contained in the external air are filtered out without passing through the porous filter members 20, so that only purified external air passes through the pores and is discharged to the other side of the filter-housing tube member 10. As a result, the external air discharged to the other side of the filter-housing tube member 10 enters the vacuum motor, that is, the apparatus.

Further, when the air suctioned in the vacuum motor, that is, the apparatus is discharged to the outside, noise is generated due to waves (vibration) of the air, and the air filter structure 1 according to the present disclosure can reduce the noise by offsetting the waves (vibration) of the air, which contains waves (vibration), during discharge.

That is, when the air suctioned in the vacuum motor is discharged to the outside, air including waves (vibration) generated in the vacuum motor enters the filter-housing tube member 10. In this case, since some of the pores of the porous filter members 20 are clogged, the pressure in the air passage 10a increases and the air passage dampens the waves (vibration) of the air and the waves (vibration) of the air are additionally filtered out through the plurality of porous filter members 20. As a result, the air that is discharged through the end of the filter-housing tube member 10 is discharged with waves removed, whereby the noise due to the operation of the vacuum motor is greatly decreased.

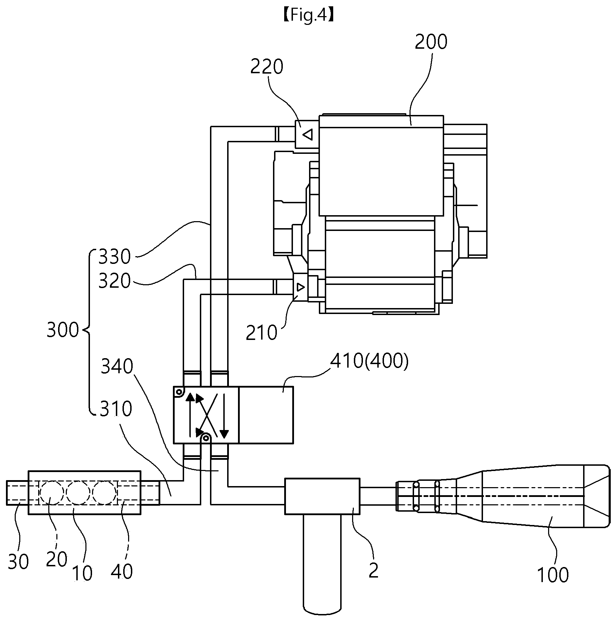

FIG. 4 is a schematic view showing an embodiment of a medical treatment apparatus using negative pressure according to the present disclosure. Referring to FIG. 4, an embodiment of a medical treatment apparatus using negative pressure according to the present disclosure includes: a cup member 100 that comes into contact with the skin of a treatment target area and has a suction space for suctioning the skin; a vacuum motor unit 200 that has a suction port 210 for suctioning air and a discharge port 220 for discharging the suctioned air to the outside; an air line part 300 for suctioning air from the inside of the cup member 100 and discharging the air to the outside or for supplying air into the cup member 100; and a valve unit 400 mounted on the air line part 300 and controls the direction of air.

The vacuum motor unit 200 may be modified and implemented as various known vacuum motors having a structure for suctioning air and discharging the suctioned air, so it is noted that a more detailed description is omitted.

The valve unit 400 is a solenoid valve having a plurality of ports to which a plurality of air lines, that is, a plurality of hoses are connected, and adjusts the direction of air by selectively connecting the plurality of air lines at the plurality of ports.

The valve unit 400 adjusts the direction of air such that the air is suctioned through the suction port 210 and discharged through the discharge port 220 both when generating negative pressure in the cup member 100 and when releasing the negative pressure in the cup member 100.

An embodiment of the medical treatment apparatus using negative pressure according to the present disclosure further includes an air filter structure 1 that is positioned on the air line part 300, removes foreign substances contained in external air that is introduced through the air line part 300, and reduces noise when air in the vacuum motor unit 200 is discharged to the outside.

The air filter structure 1 is, for example, the air filter structure 1 according to the present disclosure, and the embodiment of the air filter structure 1 according to the present disclosure is not described here again to avoid redundant description, as it has been described in detail above.

Further, an embodiment of the medical treatment apparatus using negative pressure according to the present disclosure further includes an air filter unit 2 that is positioned on the air line part 300 and removes foreign substances contained in external air that is suctioned into the vacuum motor unit 200 through the cup member 100.

It is noted that the air filter unit 2 may be the air filter structure 1 according to the present disclosure and known air filters for filtering out foreign substances contained in air may also be used.

In more detail, the valve unit 400 is a 4-port solenoid valve unit 410 including four ports to which air lines can be connected, and the air line part 300 includes: a first air line part 310 connected to a first port of the 4-port solenoid valve unit 410 and suctioning external air or discharging internal air to the outside; a second air line part 320 connecting a second port of the 4-port solenoid valve unit 410 and the suction port 210 of the vacuum motor unit 200; a third air line part 330 connecting a third port of the 4-port solenoid valve unit 410 and the discharge port 220; and a fourth air line part 340 connecting a fourth port of the 4-port solenoid valve unit 410 and the cup member 100.

The first air line part 310, the second air line part 320, the third air line part 330, and the fourth air line part 340 have a hose or tube shape through which air can pass, and are of a known structure in which a channel is formed inside to allow fluid to flow, so it is noted that a more detailed description is omitted.

Further, the 4-port solenoid valve unit 410 is a 4-port solenoid valve that adjusts the direction of air in a hose or a tube.

When the vacuum motor unit 200 operates and generates negative pressure in the cup member 100 by suctioning air in the cup member 100, electrical power is not supplied or is supplied to the 4-port solenoid valve unit 410, and the 4-port solenoid valve unit 410 connects the fourth air line part 340 and the second air line part 320 and connects the third air line part 330 and the first air line part 310.

Accordingly, when the vacuum motor unit 200 operates and generates negative pressure in the cup member 100 by suctioning air in the cup member 100, the air suctioned in the cup member 100 is suctioned into the vacuum motor unit 200 through the fourth air line part 340, the second air line part 320, and the suction port 210, and the air suctioned in the vacuum motor unit 200 is discharged through the discharge port 220. Accordingly, the air is discharged through the third air line part 330 connected to the discharge port 220 and the first air line part 310.

When the vacuum motor unit 200 operates and releases the negative pressure in the cup member 100 by suctioning external air through the first air line part 310, electrical power is supplied or is not supplied to the 4-port solenoid valve unit 410, and the 4-port solenoid valve unit 410 connects the first air line part 310 and the second air line part 320 and connects the third air line part 330 and the fourth air line part 340.

Accordingly, when the vacuum motor unit 200 operates and releases the negative pressure in the cup member 100 by suctioning external air through the first air line part 310, the air suctioned through the first air line part 310 is suctioned into the vacuum motor unit 200 through the first air line part 310, the second air line part 320, and the suction port 210, and the air suctioned in the vacuum motor unit 200 is discharged through the discharge port 220. Accordingly, the air is discharged into the cup member 100 through the third air line part 330 connected to the discharge port 220 and the fourth air line part 340, whereby the negative pressure in the cup member 100 is released.

An embodiment of the medical treatment apparatus using negative pressure according to the present disclosure repeatedly generates negative pressure in the cup member 100 by suctioning air in the cup member 100 and releases the negative pressure generated in the cup member 100 by supplying air into the cup member 100.

An embodiment of the medical treatment apparatus using negative pressure according to the present disclosure massages or treats the skin of a subject while repeatedly generating negative pressure in the cup member 100 through the vacuum motor unit 200 and releasing the generated negative pressure.

Further, an embodiment of the medical treatment apparatus using negative pressure according to the present disclosure can rapidly suction and discharge air into and from the cup member 100 because it suctions air into the suction port 210 of the vacuum motor unit 200 and discharges it through the discharge port 220 when suctioning air in the cup member 100 to generate negative pressure in the cup member 100, and suctions external air through the suction port 210 and discharges it through the discharge port 220 when supplying external air into the cup member 100 to release the negative pressure in the cup member 100.

That is, since an embodiment of the medical treatment apparatus using negative pressure according to the present disclosure uses the air suctioned through the suction port 210 of the vacuum motor unit 200 to generate negative pressure in the cup member 100 and release the negative pressure generated in the cup member 100, the time required for generating and releasing negative pressure is significantly shortened and the time interval between negative pressure generation and release is reduced, which allows for rapid repetition and enhances the skin treatment effect. Additionally, the range of control over the time interval between negative pressure generation and release is greatly expanded, whereby various therapeutic effects can be achieved.

Further, it is exemplified that the air filter structure 1 is positioned on the first air line part 310 and the air filter unit 2 is positioned on the fourth air line part 340.

The first air line part 310 is the final discharge tube for discharging the air suctioned from the cup member 100 to the outside when generating negative pressure in the cup member 100, that is, when suctioning the air in the cup member 100, and is an initial suctioning tube for suctioning external air when releasing the negative pressure in the cup member 100.

Referring to FIG. 2 and FIG. 3, the air filter structure 1 can reduce noise by offsetting waves (vibration) of air containing the waves (vibration) when the vacuum motor unit 200 suctions air in the cup member 100 to generate negative pressure and then ultimately discharges the air to the outside through the first air line part 310.

Further, when the air filter structure 1 suctions external air through the first air line part 310 to release the negative pressure in the cup member 100 and when external air enters the filter-housing tube member 10, foreign substances contained in the external air are caught by the porous filter members 20 and a load is generated in the filter-housing tube member 10, whereby a weak vacuum state is generated.

Further, the filter-housing tube member 10 made of an elastic material is contracted by the weak vacuum generated inside, the porous filter members 20 come into close contact with the inner surface of the air passage 10a, the external air passes only through the pores of the porous filter 20, foreign substances contained in the external air are filtered out without passing through the porous filter members 20, and only purified external air passes through the pores, is discharged to the other side of the filter-housing tube member 10, enters the vacuum motor unit 200, and is then supplied again into the cup member 100 through the discharge port 220.

That is, when the air suctioned in the vacuum motor unit 200 is discharged to the outside, air including waves (vibration) generated in the vacuum motor enters the filter-housing tube member 10. In this case, since some of the pores of the porous filter members 20 are clogged, the pressure in the air passage 10a increases and the air passage dampens the waves (vibration) of the air and the waves (vibration) of the air is additionally filtered out through the plurality of porous filter members 20. As a result, the air that is discharged through the end of the filter-housing tube member 10 is discharged with waves removed, whereby the noise due to the operation of the vacuum motor unit 200 is greatly decreased. Further, the foreign substances stuck between the porous filter members 20 and the inner surface of the air passage 10a are also discharged to the outside and removed.

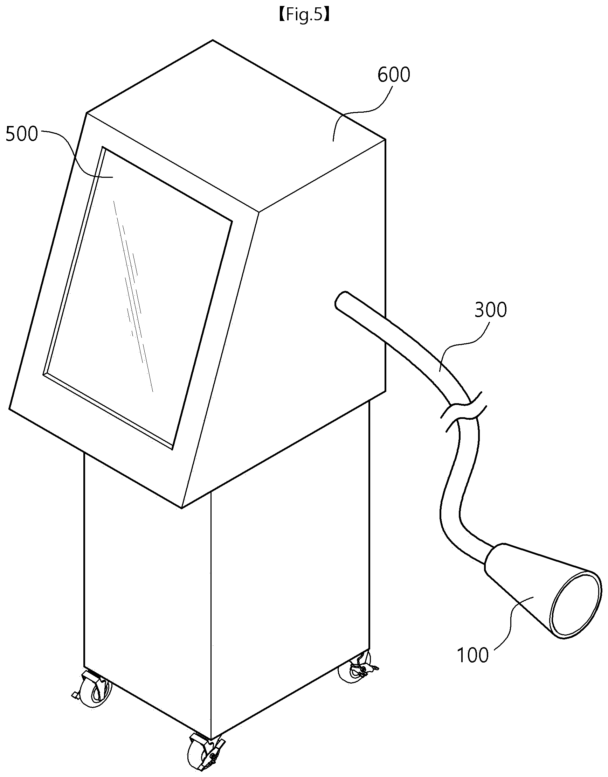

FIG. 5 is a perspective view showing an embodiment of the medical treatment apparatus using negative pressure according to the present disclosure. Referring to FIG. 4 and FIG. 5, an embodiment of the medical treatment apparatus using negative pressure according to the present disclosure further includes a body casing 600 in which the vacuum motor unit 200 and the controller 500 controlling the operation of the vacuum motor unit 200 are mounted.

The controller 50 includes a touch screen panel unit that is operated so that an operator can control the operation of the vacuum motor unit 200, supplies electric power to the vacuum motor unit 200, and controls the operation of the vacuum motor unit 200, that is, the intensity of negative pressure and the time interval of the repeated generation and release of negative pressure in the cup member 100.

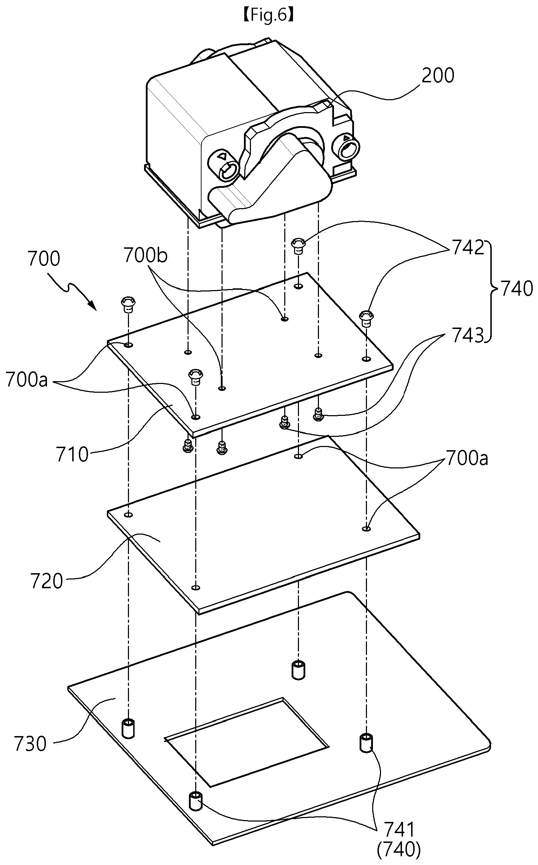

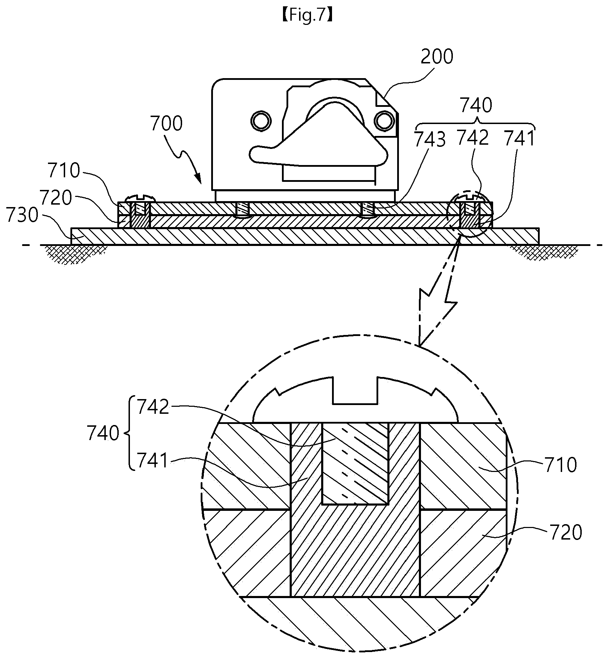

FIG. 6 is a perspective view showing a support structure of a vacuum motor in an embodiment of the medical treatment apparatus using negative pressure according to the present disclosure and FIG. 7 is a cross-sectional view showing the support structure of the vacuum motor in an embodiment of the medical treatment apparatus using negative pressure according to the present disclosure.

An embodiment of the medical treatment apparatus using negative pressure according to the present disclosure includes a vibration absorption support unit 700 on which the vacuum motor unit is disposed and that is made of an elastic material and absorbs vibration generated by the vacuum motor unit 200.

The vacuum motor unit 200 generates vibration in the process of suctioning and discharging air, the vibration generated by the vacuum motor unit 200 is transmitted to the body casing 600 and spreads throughout the equipment, whereby the vibration is transmitted to both an operator and a subject, which causes discomfort during a procedure.

The vibration absorption support unit 700 is made of an elastic material capable of absorbing shock caused by vibration and absorbs the vibration generated during the operation of the vacuum motor unit 200.

The vibration absorption support unit 700 includes a plurality of vibration absorption pads made of an elastic material and stacked together, so it more effectively absorbs the vibration generated during the operation of the vacuum motor unit 200.

In more detail, the vibration absorption support unit 700 includes a first vibration absorption pad member 710 that is made of an elastic material and on which the vacuum motor unit 200 is disposed, a second vibration absorption pad member 720 positioned under the first vibration absorption pad member 710 and made of an elastic material, and a base support member 730 positioned under the second vibration absorption pad member 720 and fixing the positions of the first vibration absorption pad member 710 and the second vibration absorption pad member 720.

Further, the vibration absorption support unit 700 further includes a pad position fixing mechanism 740 that fixes the positions of the second vibration absorption pad member 720 and the first vibration absorption pad member 710 that are sequentially stacked on the base support member 730.

It is noted that the base support member 730 is made of materials such as metal or plastic, as an example, and can be manufactured in various modified forms from known materials that have the rigidity to fix the positions of the vacuum motor unit 200, the first vibration absorption pad member 710, and the second vibration absorption pad member 720.

The pad position fixing mechanism 740 includes pad fixing boss members 741 that are positioned to protrude on the base support member 730 and are positioned through the second vibration absorption pad member 720 and the first vibration absorption pad member 710, pad fixing coupling members 742 that are coupled to the upper ends of the pad fixing boss members 741 and are in close contact with the upper portion of the first vibration absorption pad member 710, and motor fixing coupling members 743 that are positioned between the second vibration absorption pad member 720 and the first vibration absorption pad member 710 and are coupled to the lower surface of the vacuum motor unit 200 through the first vibration absorption pad member 710 between the second vibration absorption pad member 720 and the first vibration absorption pad member 710.

A plurality of boss through-holes 700a through which the pad fixing boss members 741 pass is positioned in the first vibration absorption pad member 710 and the second vibration absorption pad member 720, respectively, and the pad fixing boss members 741 protrude at a height equal to the stacked height of the first vibration absorption pad member 710 and the second vibration absorption pad member 720 or has a height between 95% and 100% of the stacked height, whereby the first vibration absorption pad member 710 can be pressed by the pad fixing coupling members 742 coupled to the upper end, as an example.

When the height of pad fixing boss members 741 is greater than the stacked height of the first vibration absorption pad member 710 and the second vibration absorption pad member 720, that is, the sum of the height of the first vibration absorption pad member 710 and the height of the second vibration absorption pad member 720, the pad fixing coupling members 742 cannot be in close contact with the first vibration absorption pad member 710, so the positions of the first vibration absorption pad member 710 and the second vibration absorption pad member 720 are not firmly fixed.

Further, when the height of pad fixing boss members 741 is less than 95% of the stacked height of the first vibration absorption pad member 710 and the second vibration absorption pad member 720, that is, the sum of the height of the first vibration absorption pad member 710 and the height of the second vibration absorption pad member 720, the first vibration absorption pad member 710 is excessively pressed by the pad fixing coupling members 742, so the durability of the first vibration absorption pad member 710 decreases and the first vibration absorption pad member 710 may be easily torn at the portions at which the pad fixing coupling members 742 are coupled.

Pad fixing thread grooves in which bolts can be fastened are positioned on the top of the pad fixing boss members 741, and the pad fixing coupling members 742 are pad fixing bolts fastened in the pad fixing thread grooves, as an example.

The pad fixing bots are fastened to the pad fixing thread grooves with the heads thereof in close contact with the first vibration absorption pad member 710, thereby fixing the positions of the first vibration absorption pad member 710 and the second vibration absorption pad member 720.

Further, a plurality of motor fixing through-holes 700b through which the motor fixing coupling members 743 are disposed is positioned on the first vibration absorption pad member 710, and the motor fixing coupling members 743 are, as an example, motor fixing bolts fastened to the bottom of the vacuum motor unit 200 through the motor fixing through-holes 700b.

Though not shown, bolt fastening grooves in which the motor fixing bolts are fastened are, as an example, positioned on the bottom of the vacuum motor unit 200.

Vibration generated by the operation of the vacuum motor unit 200 is transmitted to the first vibration absorption pad member 710 and the first vibration absorption pad member 710 primarily offsets the vibration of the vacuum motor unit 200.

Further, the vibration of the vacuum motor unit 20 is transmitted to the motor fixing coupling members 743, that is, the motor fixing bolts, and the vibration transmitted to the motor fixing bolts is transmitted to the second vibration absorption pad member 720 and offset.

Further, the vibration transmitted to the first vibration absorption pad member 710 is transmitted to the second vibration absorption pad member 720, the second vibration absorption pad member 720 is fixed together with the first vibration absorption pad member 710 by the pad fixing boss members 741 protruding from the base support member 730, thereby completely offsetting the vibration generated by the vacuum motor unit 200 while absorbing vibration of the first vibration absorption pad member 710.

That is, vibration generated by the vacuum motor unit 200 is primarily offset by the first vibration absorption pad member 710 and the second vibration absorption pad member 720 absorbs vibration that is transmitted to the motor fixing coupling members 743 fixing the position of the vacuum motor unit 200 by being directly fastened to the vacuum motor unit 200 and vibration remaining after absorbed by the first vibration absorption pad member 710, whereby the vibration of the vacuum motor unit 200 is completely prevented from being transmitted to the base support member 730.

Accordingly, the medical treatment apparatus using negative pressure according to the present disclosure absorbs vibration generated from the vacuum motor unit 200 such that vibration is not transmitted to an operator and a subject during a procedure, thereby greatly improving the convenience and satisfaction of a procedure.

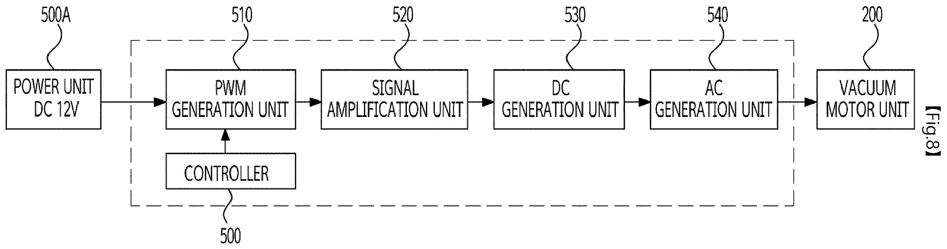

Meanwhile, FIG. 8 is a circuit diagram showing an embodiment of the controller 500 that controls the operation of the vacuum motor unit 200 in an embodiment of the medical treatment apparatus using negative pressure according to the present disclosure. Referring to FIG. 8, in an embodiment of a medical treatment apparatus using negative pressure according to the present disclosure, the controller 500, as an example, controls the performance, that is, operation of the vacuum motor unit 200 by changing a DC voltage in an AC voltage and then adjusting the AC voltage.

In general, the performance of an AC motor and a vacuum motor is controlled through phase control of AC, and in this case, an AC motor such as a vacuum motor has a problem that vibration becomes severe and noise is significantly generated.

Referring to FIG. 8, in an embodiment of a medical treatment apparatus using negative pressure according to the present disclosure, the controller 500 controls the performance, that is, operation of the vacuum motor unit 200 by changing a DC voltage in an AC voltage and then adjusting the AC voltage, thereby being able to reduce vibration and noise that are generated by the vacuum motor unit 200 and more specifically control the operation of the vacuum motor unit 200.

The controller 500 is connected to a DC power unit 500a, converts DC power into DC power having a wider bandwidth, changes it into AC power, that is, alternating power, and supplies the converted AC power to the vacuum motor unit 200, thereby controlling the operation of a motor.

In more detail, the controller 500 includes a PWM signal generation unit 510 that is connected to the DC power unit 500a and converts the DC power into a Pulse Width Modulation (PWM) signal, a signal amplification unit 520 that amplifies the PWM signal generated by the PWM signal generation unit 510, a DC power conversion unit 530 that converts alternating current power amplified by the signal amplification unit 520 into DC power, and an AC generation unit 540 that converts the converted DC power into AC power, i.e., alternating current power, and supplies it to the vacuum motor unit 200.

For example, the DC power unit 500a supplies 12V DC power, and the signal amplification unit 520 and the DC power conversion unit 530 amplify the PWM signal generated by the PWM signal generation unit 510 and convert it into DC power in the range of 0 to 220V.

Further, the AC generation unit 540 converts the DC power ranging from 0 to 220V into AC power having a frequency acceptable to the vacuum motor unit 200, for example, a frequency of 50/60 Hz, and supplies the converted alternating current power to the vacuum motor unit 200, thereby controlling the operation of the vacuum motor unit 200.

The controller 500 is connected to the PWM signal generation unit 510 and generates a frequency by converting DC power into an alternating signal (PWM signal) at the PWM signal generation unit 510, and controls the operation of the vacuum motor unit 200, that is, the intensity of the negative pressure and the time interval of the repeated generation and release of negative pressure in the cup member 100 by adjusting DC power to the level of the alternating current power converted through the AC generation unit 540.

When DC power is directly converted into AC power (50/60 Hz), the frequency is low, which results in low efficiency of the transformer used for the conversion.

Accordingly, in an embodiment of a medical treatment apparatus using negative pressure according to the present disclosure, the controller 500 primarily converts DC power into an alternating signal (PWM signal) to improve the efficiency of the transformer, amplifies it to a high frequency (kHz), obtains a desired voltage by generating alternating current power (0 to 220V), and generate Dc power by smoothing the high-frequency alternating current power again.

That is, DC 12V is converted into DC power (0V to 220V), and the boosted DC power (0 to 220V) is secondarily converted into a frequency (50/60 Hz) at which the vacuum motor unit 200 operates, whereby it is used as the operating power of the motor.

Since the controller 500 secondarily changes the boosted DC power (0 to 220V) to the frequency (50/60Hz) at which the vacuum motor unit 200 operates, and uses it as the operating power of the motor, the controller 500 controls the operation of the vacuum motor unit 200 by adjusting the level of AC power rather than controlling the phase of AC power, whereby it is possible to reduce noise and vibration by the motor. Further, since the voltage can be finely controlled in the range of 0 to 220V, the operation of the vacuum motor unit 200 can be precisely controlled.

The present disclosure can filter out and remove foreign matter from air in an air line that repeatedly generates negative pressure, and can reduce noise generated during the operation of a vacuum motor. Accordingly, it is possible to prevent malfunctions and failures of devices due to foreign substances, improve the use environment significantly, and greatly enhance the marketability of devices.

The present disclosure can minimize the time for which negative pressure is repeated by reducing the interval of suctioning and discharging air using a 4-port solenoid valve unit 410, thereby being able to significantly enhance the treatment effect from negative pressure and obtain various therapeutic effects.

The present disclosure is not limited to the embodiments described above and may be modified in various ways without departing from the scope of the present disclosure and the modifications should be construed as being included in the present disclosure.

## Claims

1. An air filter structure comprising:
a filter-housing tube member having both ends open and having an air passage allowing air to pass; and
a porous filter member positioned in the air passage and having a plurality of pores allowing air to pass.

2. The air filter structure of claim 1, further comprising:
a first filter connection tube member connected to a first side of the filter-housing tube member and having a channel with a diameter smaller than a diameter of the air passage; and
a second filter connection tube member connected to a second side of the filter-housing tube member and having a channel with a diameter smaller than a diameter of the air passage,
wherein the porous filter member includes a plurality of porous filter members positioned between the first filter connection tube member and the second filter connection tube member, and is held to be limited in movement by the first filter connection tube member and the second filter connection tube member.

3. The air filter structure of claim 1, wherein the filter-housing tube member contracts due to pressure drop generated therein when filtering out foreign substances through the porous member while external air is suctioned through a first port on the first side and discharged through a second port on the second side, and offsets waves of air including waves by expanding when air is discharged through the first port from the second port.

4. A medical treatment apparatus using negative pressure, the apparatus comprising:
a cup member configured to come in contact with the skin of a treatment target area and having a suction space for suctioning the skin;
a vacuum motor unit having a suction port for suctioning air and a discharge port for discharging air suctioned therein to the outside;
an air line part connected to the vacuum motor unit and the cup member and configured to suction and discharge air in the cup member to the outside or supply air into the cup member;
an air filter structure positioned on the air line part; and
a valve unit connected to a plurality of air line parts and configured to adjust the direction of air flowing through the air line parts,
wherein the valve unit adjusts the direction of air such that air is suctioned through the suction port and discharged through the discharge port when negative pressure is generated in the cup member or generative pressure in the cup member is released.

5. The medical treatment apparatus of claim 4, wherein the air filter structure comprises:
a filter-housing tube member having both ends open and having an air passage allowing air to pass; and
a porous filter member positioned in the air passage and having a plurality of pores allowing air to pass.

6. The medical treatment apparatus of claim 5, wherein the air line part further comprises:
a first filter connection tube member having a channel with a diameter smaller than a diameter of the air passage and inserted in a first side of the filter-housing tube member; and
a second filter connection tube member having a channel with a diameter smaller than a diameter of the air passage and inserted in a second side of the filter-housing tube member, and
the porous filter member includes a plurality of porous filter members positioned between the first filter connection tube member and the second filter connection tube member, and is held to be limited in movement by the first filter connection tube member and the second filter connection tube member.

7. The medical treatment apparatus of claim 5, wherein the filter-housing tube member reduces noise by offsetting waves of air including waves by expanding when air in the cup member suctioned from the vacuum motor unit is discharged to the outside to generate negative pressure in the cup member, and contracts when external air is suctioned into the air line part to release negative pressure in the cup member.

8. The medical treatment apparatus of claim 4, wherein the valve unit is a 4-port solenoid valve unit comprising four ports to which air line parts can be connected, and
the air line part comprises:
a first air line part connected to a first port of the 4-port solenoid valve unit and suctioning external air or discharging internal air to the outside;
a second air line part connecting a second port of the 4-port solenoid valve unit and the suction port of the vacuum motor unit;
a third air line part connecting a third port of the 4-port solenoid valve unit and the discharge port; and
a fourth air line part connecting a fourth port of the 4-port solenoid valve unit and the cup member.

9. The medical treatment apparatus of claim 8, wherein when the vacuum motor unit operates and generates negative pressure in the cup member by suctioning air in the cup member, the 4-port solenoid valve connects the fourth air line part and the second air line part and connects the third air line part and the first air line part; and
when the vacuum motor unit operates and releases negative pressure in the cup member by suctioning external air through the first air line part, the 4-port solenoid valve connects the first air line part and the second air line part and connects the third air line part and the fourth air line part.

10. The medical treatment apparatus of claim 9, wherein the air filter structure is positioned on the first air line part, removes foreign substances contained in external air that is introduced through the first air line part, and reduces noise when air in the vacuum motor unit is discharged to the outside through the first air line part.

11. The medical treatment apparatus of claim 10, wherein the air filter structure comprises:
a filter-housing tube member having both ends open and having an air passage allowing air to pass; and
a porous filter member positioned in the air passage and having a plurality of pores allowing air to pass,
the filter-housing tube member is made of an elastic member that can be contracted or expanded by pressure of air, and
the filter-housing tube member reduces noise by offsetting waves of air including waves by expanding when air in the cup member suctioned from the vacuum motor unit is discharged to the outside to generate negative pressure in the cup member.

12. A medical treatment apparatus using negative pressure, the apparatus comprising:
a cup member configured to come in contact with the skin of a treatment target area and having a suction space for suctioning the skin;
a vacuum motor unit having a suction port for suctioning air and a discharge port for discharging air suctioned therein to the outside;
an air line part connecting the cup member and the vacuum motor unit;
an air filter structure positioned on the air line part; and
a vibration absorption support unit on which the vacuum motor unit is disposed and that is made of an elastic member and configured to absorb vibration generated by the vacuum motor unit.

13. The medical treatment apparatus of claim 12, wherein the vibration absorption support unit comprises:
a first vibration absorption pad member that is made of an elastic material and on which the vacuum motor unit is disposed;
a second vibration absorption pad member positioned under the first vibration absorption pad member and made of an elastic material; and
a base support member positioned under the second vibration absorption pad member and configured to fix positions of the first vibration absorption pad member and the second vibration absorption pad member.

14. The medical treatment apparatus of claim 13, wherein the vibration absorption support unit further comprises a pad position fixing mechanism configured to fix the positions of the second vibration absorption pad member and the first vibration absorption pad member sequentially stacked on the base support member.

15. The medical treatment apparatus of claim 14, wherein the pad position fixing mechanism comprises:
pad fixing boss members positioned to protrude on the base support member and positioned through the second vibration absorption pad member and the first vibration absorption pad member;
pad fixing coupling members coupled to upper ends of the pad fixing boss members and being in close contact with an upper portion of the first vibration absorption pad member; and
motor fixing coupling members positioned between the second vibration absorption pad member and the first vibration absorption pad member and coupled to a lower surface of the vacuum motor unit through the first vibration absorption pad member between the second vibration absorption pad member and the first vibration absorption pad member.

16. The medical treatment apparatus of claim 15, wherein the pad fixing boss members protrude at a height equal to a stacked height of the first vibration absorption pad member and the second vibration absorption pad member or has a height between 95% and 100% of the stacked height.

17. The medical treatment apparatus of claim 15, wherein pad fixing thread grooves in which bolts can be fastened are positioned on a top of the pad fixing boss members, and
the pad fixing coupling members are pad fixing bolts fastened in the pad fixing thread grooves.

18. The medical treatment apparatus of claim 15, wherein a plurality of motor fixing through-holes through which the motor fixing coupling members are disposed is positioned on the first vibration absorption pad member, and
the motor fixing coupling members are motor fixing bolts fastened to a bottom of the vacuum motor unit through the motor fixing through-holes.

19. The medical treatment apparatus of claim 12, further comprising
a controller configured to control operation of the vacuum motor unit, and
the controller is connected to a DC power unit, converts DC power into DC power having a wider bandwidth, changes the DC power into AC power, supplies the converted AC power to the vacuum motor unit, and adjusts a level of the AC power, thereby controlling operation of the vacuum motor unit.

20. The medical treatment apparatus of claim 19, wherein the controller comprises:
a PWM signal generation unit is connected to the DC power unit and configured to convert DC power into a Pulse Width Modulation (PWM) signal;
a signal amplification unit configured to amplify the PWM signal generated by the PWM signal generation unit;
a DC power conversion unit configured to convert alternating current power amplified by the signal amplification unit into DC power; and
an AC generation unit configured to convert the converted DC power into AC and supply the AC power to the vacuum motor unit.
